# EUROPÄISCHE PATENTSCHRIFT

(11) **EP 4 244 973 B1**
(45) Veröffentlichungstag und Bekanntmachung des Hinweises auf die Patenterteilung: **11.02.2026**
(21) Anmeldenummer: 21802249.9
(22) Anmeldetag: 28.10.2021
(51) Int. Cl.: H02P 21/22, B25F 5/00

(54) **ELEKTROWERKZEUG, VERFAHREN UND COMPUTERPROGRAMMPRODUKT**
ELECTRIC TOOL, METHOD, ASSEMBLY AND COMPUTER PROGRAM PRODUCT
OUTIL ÉLECTRIQUE, PROCÉDÉ ET PRODUIT DE PROGRAMME INFORMATIQUE

(30) Priorität: 10.11.2020 DE 102020214109
(43) Veröffentlichungstag der Anmeldung: 20.09.2023
(73) Patentinhaber: Festool GmbH, 73240 Wendlingen am Neckar (DE)
(72) Erfinder: THÜRINGER, Michael, 72663 Großbettlingen (DE); FÜRST, Alexander, 73072 Donzdorf (DE); SCHNELLE, Patrick, 73760 Ostfildern (DE); HOFMANN, Tobias, 73230 Kirchheim (DE); CALTA, Michal, 47006 Ceská Lípa (CZ)
(74) Vertreter: Patentanwälte Magenbauer & Kollegen Partnerschaft mbB
(86) Internationale Anmeldenummer: PCT/EP2021/079916
(87) Internationale Veröffentlichungsnummer: WO 2022/101019

(56) Entgegenhaltungen:
- EP-A1- 2 949 036
- EP-A1- 3 068 032
- EP-A1- 3 386 096
- EP-A2- 2 765 703
- EP-B1- 2 949 036
- US-A1- 2014 028 237
- SAREN H ET AL: "DTC Driven Single Phase Fed Voltage Source Inverter with Small DC-Link Capacitor", INDUSTRIAL ELECTRONICS, 2005. ISIE 2005. PROCEEDINGS OF THE IEEE INTER NATIONAL SYMPOSIUM ON DUBROVNIK, CROATIA JUNE 20-23, 2005, PISCATAWAY, NJ, USA,IEEE, vol. 2, 20 June 2005 (2005-06-20), pages 411 - 416, XP010850114, ISBN: 978-0-7803-8738-6, DOI: 10.1109/ISIE.2005.1528952

## Beschreibung

Die Erfindung betrifft ein Elektrowerkzeug, insbesondere ein handgeführtes Elektrowerkzeug, beispielsweise ein Poliergerät, ein Schleifgerät und/oder ein Sägegerät, mit einem Werkzeug, einem Elektromotor zum Antrieb des Werkzeugs und einer Steuereinheit zur Ansteuerung des Elektromotors. Das Elektrowerkzeug ist zum Anschluss an eine Netzspannung ausgebildet und umfasst eine Gleichrichteranordnung mit einem Zwischenkreis zur Bereitstellung einer Zwischenkreis-Spannung auf Basis der Netzspannung.

Der Zwischenkreis ist beispielsweise ein Kondensator, der insbesondere zur Glättung der gleichgerichteten Netzspannung dient. Für die Dimensionierung des Zwischenkreises gibt es verschiedene Ansätze. Ein erster Ansatz ist es, den Zwischenkreis so groß zu dimensionieren, dass die Zwischenkreis-Spannung nahezu konstant ist. Dies ermöglicht insbesondere nahezu konstante Phasenströme für die Bestromung des Elektromotors und einen daraus resultierenden nahezu konstanten Drehmomentverlauf des Elektromotors. Allerdings führt ein großer Zwischenkreis zu einem schlechten Leistungsfaktor (Powerfactor) und zu hohen harmonischen Anteilen im Aufnahmestrom. Ein zweiter Ansatz ist es, den Zwischenkreis klein zu dimensionieren, so dass die Zwischenkreis-Spannung der Netzspannung, insbesondere der gleichgerichteten Netzspannung, folgt. In der Regel ist jedoch bei einem derart kleinen Zwischenkreis die ohmsche Verlustleistung in den Motorwicklungen größer, so dass der Elektromotor größer ausgelegt werden muss. Ferner kann ein derart kleiner Zwischenkreis zur Folge haben, dass es bei einer konventionellen Ansteuerung des Elektromotors zu Bereichen kommen kann, in denen die induzierte Gegenspannung des Elektromotors größer oder gleich der Zwischenkreis-Spannung wird und kein Strom in den Motor fließen kann. Dieses Verhalten kann zu einem Drehmomentrippel mit der doppelten Netzfrequenz führen.

Die EP 3 068 032 A1 betrifft ein Elektrowerkzeug mit einem Glättungskondensator, der konfiguriert ist, aus einer gleichgerichteten Spannung eine pulsierende Spannung zu erzeugen.

Die EP 2 949 036 A1 betrifft eine Elektromotorsteuerung.

Die US 2014/028237 A1 betrifft ein Umrichtersteuergerät.

Saren H et al: "DTC Driven Single Phase Fed Voltage Source Inverter with Small DC-Link Capacitor", Industrial Electronics, 2005. ISIE 2005. Proceedings of the IEEE Inter National Symposium on Dubrovnik, Croatia June 20-23, 2005, Piscataway, NJ, USA, IEEE, Bd. 2, 20. Juni 2005, Seiten 411-416, betrifft die Verwendung eines relativ kleinen Filmkondensators.

Die EP 3 386 096 A1 betrifft Waveform-Shaping bei einem Elektrowerkzeug.

Die EP 2 765 703 A2 betrifft eine Motorsteuerung.

Eine Aufgabe der Erfindung besteht darin, ein verbessertes Elektrowerkzeug bereitzustellen, insbesondere ein Elektrowerkzeug, das bei geringer ohmscher Verlustleistung einen guten Leistungsfaktor erzielt.

Die Aufgabe wird gelöst durch ein Elektrowerkzeug gemäß Anspruch 1.

Bei dem Elektrowerkzeug weist die Zwischenkreis-Spannung eine Mehrzahl von aufeinander folgenden Spannungs-Halbwellen auf. Insbesondere ist der Zwischenkreis, beispielsweise ein Kondensator, so klein dimensioniert, dass die Zwischenkreis-Spannung der gleichgerichteten Netzspannung folgt und sich dadurch die Spannungs-Halbwellen bilden. Die gleichgerichtete Netzspannung umfasst insbesondere eine Abfolge von positiven Sinus-Halbwellen. Exemplarisch folgt die Zwischenkreis-Spannung der gleichgerichteten Netzspannung über wenigstens 50% der Amplitude der gleichgerichteten Netzspannung. Beispielsweise folgt die Zwischenkreis-Spannung der gleichgerichteten Netzspannung in einem Bereich von 140 V bis 320 V. Durch den kleinen Zwischenkreis wird zweckmäßigerweise ein guter Leistungsfaktor erzielt, beispielsweise ein Leistungsfaktor von wenigstens 0,70 oder von wenigstens 0,75.

Ferner ist bei dem Elektrowerkzeug die Steuereinheit ausgebildet, für jede Spannungs-Halbwelle eine jeweilige Drehmoment-Halbwelle für die Ansteuerung des Elektromotors bereitzustellen, insbesondere zu berechnen. Jeder Spannungs-Halbwelle ist zweckmäßigerweise eine jeweilige Drehmoment-Halbwelle zugeordnet, die insbesondere die gleiche Periode und/oder den gleichen Phasenwinkel wie die Spannungs-Halbwelle aufweist. Die Kurvenform der Spannungs-Halbwelle ist gegenüber der Kurvenform der (jeweils zugeordneten) Spannungs-Halbwelle abgeflacht. Dies bedeutet, dass die Drehmoment-Halbwelle zweckmäßigerweise gleichmäßiger verläuft als die Spannungs-Halbwelle. Beispielsweise ist das Verhältnis aus Maximum und Durchschnitt der Drehmoment-Halbwelle geringer als das Verhältnis aus Maximum und Durchschnitt der Spannungs-Halbwelle. Vorzugsweise ist die Standardabweichung der jeweiligen Drehmoment-Halbwelle geringer als die Standardabweichung der jeweils zugeordneten Spannungs-Halbwelle.

Durch eine abgeflachte Kurvenform der Drehmoment-Halbwelle kann das Verhältnis aus Drehmoment und ohmscher Verlustleistung verbessert werden. Die Bestromung des Elektromotors ist proportional zum vorgegebenen Drehmoment - also zur Drehmoment-Halbwelle. Die ohmsche Verlustleistung ist eine Funktion des Quadrats der Bestromung. Folglich führen höhere Bestromungen zu einem (in Bezug auf das erzielte Drehmoment) überproportionalen Anstieg der ohmschen Verlustleistung. Durch die abgeflachte Drehmoment-Halbwelle kann ein solcher überproportionaler Anstieg der ohmschen Verlustleistung vermieden werden. Insbesondere kann durch die abgeflachte Kurvenform eine geringere ohmsche Verlustleistung bei der Bestromung des Elektromotors bewirkt werden. Durch die abgeflachte Kurvenform wird insbesondere bei gleichem mittleren Drehmoment (wie beispielsweise bei einer nichtabgeflachten Kurvenform, beispielsweise einer Sinus-Kurvenform) eine geringere ohmsche Verlustleistung bei der Bestromung des Elektromotors erzielt. Mit "mittlerem Drehmoment" ist das Durchschnitts-Drehmoment gemeint.

Jede Drehmoment-Halbwelle verfügt über Drehmoment-Minima, die sich zusammen zeitlich über wenigstens 10% der Periode der Drehmoment-Halbwelle erstrecken.

Vorteilhafte Weiterbildungen sind Gegenstand der Unteransprüche.

Die Erfindung betrifft ferner ein Verfahren zum Betrieb eines Elektrowerkzeugs, insbesondere eines handgeführten Elektrowerkzeugs, beispielsweise eines Poliergeräts, Schleifgeräts und/oder Sägegeräts, mit einem Werkzeug, einem Elektromotor zum Antrieb des Werkzeugs und einer Steuereinheit zur Ansteuerung des Elektromotors, umfassend die Schritte: Bereitstellen, mittels einer Gleichrichteranordnung mit einem Zwischenkreis, einer Zwischenkreis-Spannung auf Basis einer Netzspannung, an die das Elektrowerkzeug angeschlossen ist, wobei die Zwischenkreis-Spannung eine Mehrzahl von aufeinander folgenden Spannungs-Halbwellen aufweist, und, für jede Spannungs-Halbwelle, Bereitstellen einer jeweiligen Drehmoment-Halbwelle für die Ansteuerung des Elektromotors, deren Kurvenform gegenüber der Kurvenform der Spannungs-Halbwelle abgeflacht ist. Jede Drehmoment-Halbwelle verfügt über Drehmoment-Minima, die sich zusammen zeitlich über wenigstens 10% der Periode der Drehmoment-Halbwelle erstrecken.

Vorzugsweise wird eine Anordnung bereitgestellt, umfassend einen Elektromotor zum Antrieb eines Werkzeugs und eine Steuereinheit zur Ansteuerung des Elektromotors. Die Steuereinheit ist ausgebildet, für jede Spannungs-Halbwelle einer Zwischenkreis-Spannung eine jeweilige Drehmoment-Halbwelle für die Ansteuerung des Elektromotors bereitzustellen, deren Kurvenform gegenüber der Kurvenform der Spannungs-Halbwelle abgeflacht ist.

Die Erfindung betrifft ferner ein Computerprogrammprodukt umfassend Befehle, die bewirken, dass das Elektrowerkzeug die vorstehend genannten Verfahrensschritte ausführt.

Vorzugsweise wird ein computerlesbares Medium bereitgestellt, auf dem das Computerprogramm gespeichert ist.

Vorzugsweise wird ein Verfahren durchgeführt, umfassend den Schritt: Aufspielen des Computerprogrammprodukts auf ein Elektrowerkzeug.

Weitere exemplarische Details sowie beispielhafte Ausführungsformen werden nachstehend unter Bezugnahme auf die Figuren erläutert. Dabei zeigt
- Figur 1: eine schematische Darstellung eines als Poliergerät ausgeführten Elektrowerkzeugs,
- Figur 2: eine schematische Darstellung eines als Sägegerät ausgeführten Elektrowerkzeugs,
- Figur 3: eine schematische Darstellung der Gleichrichteranordnung, der Steuereinheit und des Elektromotors des Elektrowerkzeugs,
- Figur 4: ein zeitlicher Verlauf einer Zwischenkreis-Spannung,
- Figur 5: ein zeitlicher Verlauf eines Drehmoments und
- Figur 6: ein Blockdiagramm einer Signalverarbeitung.

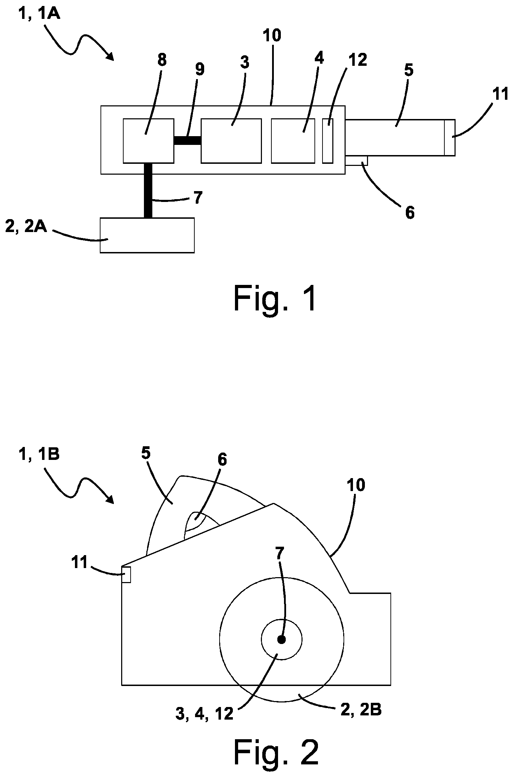

Die Figuren 1 und 2 zeigen exemplarische Ausführungen eines Elektrowerkzeugs 1. Exemplarisch ist das Elektrowerkzeug 1 als handgeführtes Elektrowerkzeug ausgeführt. Das Elektrowerkzeug 1 kann von einem Benutzer händisch gegriffen, getragen und/oder geführt werden. Das Elektrowerkzeug 1 kann insbesondere als Poliergerät 1A (siehe Figur 1) oder als Sägegerät 1B (siehe Figur 2) ausgeführt sein. Das Poliergerät 1A ist beispielsweise eine Poliermaschine, insbesondere ein Rotationspolierer. Das Sägegerät 1B ist beispielsweise eine Tauchsäge. Alternativ kann das Elektrowerkzeug 1 auch als ein anderes Elektrowerkzeug ausgeführt sein, beispielsweise als ein Schleifgerät, insbesondere als ein Renovierungsschleifer.

Das Elektrowerkzeug 1 umfasst ein Werkzeug 2. Das Werkzeug 2 ist exemplarisch als Polierteller 2A oder als Sägeblatt 2B ausgeführt. Alternativ kann das Werkzeug 2 auch als ein anderes Werkzeug, beispielsweise als ein Schleifteller, ausgeführt sein. Das Werkzeug 2 dient insbesondere dazu, ein Werkstück zu bearbeiten, insbesondere in einem Zustand, in dem das Werkzeug 2 von einem Elektromotor 3 in eine Arbeits-Bewegung, insbesondere in eine Drehbewegung, versetzt wird.

Das Elektrowerkzeug 1 umfasst den Elektromotor 3 zum Antrieb des Werkzeugs 2. Der Elektromotor 3 ist insbesondere ausgebildet, die Antriebs-Drehbewegung bereitzustellen, auf deren Basis das Werkzeug 2 angetrieben wird. Der Elektromotor 3 ist beispielsweise als EC-Motor - also als elektronisch kommutierter Motor - ausgebildet. Der Elektromotor 3 ist insbesondere ein bürstenloser Motor, vorzugsweise ein bürstenloser Gleichstrommotor, BLDC-Motor.

Das Elektrowerkzeug 1 umfasst ferner eine Steuereinheit 4 zur Ansteuerung des Elektromotors 3. Die Steuereinheit 4 umfasst beispielsweise einen Microcontroller und/oder eine Leistungselektronik. Die Steuereinheit 4 ist insbesondere ausgebildet, zur Ansteuerung des Elektromotors 3 dem Elektromotor 3 mehrere insbesondere zueinander phasenverschobene Motorströme I1, I2, I3 zuzuführen, um zweckmäßigerweise zu bewirken, dass der Elektromotor 3 die Antriebs-Drehbewegung durchführt. Die Motorströme I1, I2, I3 können auch als Phasenströme bezeichnet werden. Die Steuereinheit 4 verfügt zweckmäßigerweise über einen Wechselrichter zur Bereitstellung der Motorströme I1, I2, I3.

Exemplarisch umfasst das Elektrowerkzeug 1 ferner einen Griff 5, mit dem ein Benutzer das Elektrowerkzeug 1 händisch greifen, tragen und/oder führen kann. Das Elektrowerkzeug 1 umfasst ferner eine Bedieneinrichtung 6, beispielsweise eine Taste und/oder einen Schalter, über die der Benutzer den Antrieb des Werkzeugs 2 steuern, insbesondere starten und/oder stoppen, kann. Exemplarisch ist die Bedieneinrichtung 6 an dem Griff 5 angeordnet.

Das Elektrowerkzeug 1 umfasst zweckmäßigerweise eine Welle 7, über die das Werkzeug 2 mit dem Elektromotor 3 gekoppelt ist, so dass das Werkzeug 2 von dem Elektromotor 3 angetrieben werden kann. Optional kann das Elektrowerkzeug 1 ein Getriebe, insbesondere ein Winkelgetriebe 8 umfassen, über das das Werkzeug 2 mit dem Elektromotor 3 gekoppelt ist. In der Figur 1 umfasst das Elektrowerkzeug 1 exemplarisch eine Koppelwelle 9, über die der Elektromotor 3 mit dem Winkelgetriebe 8 gekoppelt ist. Das Winkelgetriebe 8 ist exemplarisch über die Welle 7 mit dem Werkzeug 2 gekoppelt. Alternativ kann der Elektromotor 3 direkt mit dem Werkzeug 2 gekoppelt sein, beispielsweise über die Welle 7.

Das Elektrowerkzeug 1 umfasst exemplarisch ein Außengehäuse 10, in dem zweckmäßigerweise der Elektromotor 3, die Steuereinheit 4 und/oder eine Gleichrichteranordnung 12 angeordnet ist. Exemplarisch ist der Griff 5 an dem Außengehäuse 10 angeordnet. Alternativ kann der Griff 5 Teil des Außengehäuses 10 sein.

Das Elektrowerkzeug 1 ist zum Anschluss an eine Netzspannung V1 ausgebildet (siehe Figur 2). Die Netzspannung V1 ist eine Wechselspannung. Die Netzspannung V1 ist insbesondere sinusförmig und weist exemplarisch einen Effektivwert von 230 V und/oder eine Netzfrequenz von 50 Hz auf. Ferner kann die Netzspannung V1 einen Effektivwert von 120 V und/oder eine Netzfrequenz von 60 Hz aufweisen. Das Elektrowerkzeug 1 umfasst einen Anschluss 11, beispielsweise einen Netzstecker und/oder einen Netzstecker-Anschluss, über den das Elektrowerkzeug 1 an die Netzspannung, beispielsweise an eine Steckdose, angeschlossen werden kann.

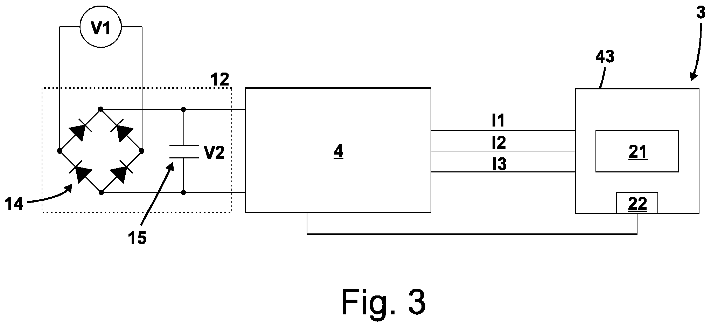

Das Elektrowerkzeug 1 verfügt über die Gleichrichteranordnung 12, die exemplarisch im Außengehäuse 10 angeordnet ist. Die Gleichrichteranordnung 12 ist z.B. in der Figur 3 gezeigt. Die Gleichrichteranordnung 12 ist ausgebildet, auf Basis der Netzspannung V1 eine Zwischenkreis-Spannung V2 bereitzustellen. Die Gleichrichteranordnung 12 umfasst einen Gleichrichter 14, der exemplarisch als Brückengleichrichter ausgeführt ist. Der Gleichrichter 14 umfasst zweckmäßigerweise vier Dioden, die exemplarisch als Brücke geschaltet sind. Die Netzspannung V1 wird dem Gleichrichter 14 zugeführt, der auf Basis der Netzspannung V1 eine gleichgerichtete Netzspannung bereitstellt. Die Gleichrichteranordnung 12 umfasst ferner einen Zwischenkreis 15, der exemplarisch als Kondensator ausgeführt ist. Der Zwischenkreis 15 ist an den Ausgang des Gleichrichters 14 angeschlossen. Der Zwischenkreis 15 dient dazu, die gleichgerichtete Netzspannung zu glätten. Die geglättete gleichgerichtete Netzspannung soll auch als Zwischenkreis-Spannung V2 bezeichnet werden. Die Zwischenkreis-Spannung V2 fällt über dem Zwischenkreis 15, insbesondere über dem Kondensator, ab.

Der Zwischenkreis 15, insbesondere der Kondensator, ist beispielsweise kleiner als 100 *µ*F kleiner als 50 *µ*F kleiner als 30 *µ*F kleiner als 20 *µ*F oder kleiner als 10 *µ*F.

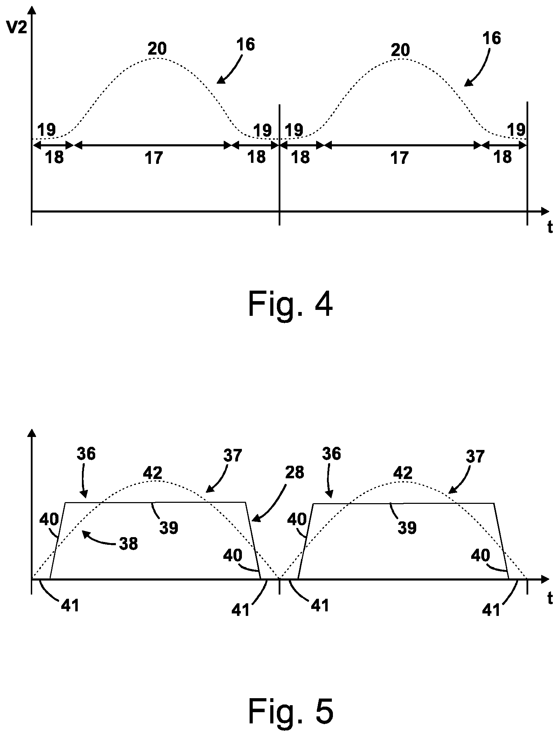

Ein exemplarischer zeitlicher Verlauf der Zwischenkreis-Spannung V2 ist in der Figur 4 gezeigt. Die Zwischenkreis-Spannung V2 umfasst eine Mehrzahl von aufeinander folgenden Spannungs-Halbwellen 16. Exemplarisch umfassen die Spannungs-Halbwellen 16 jeweils einen Sinusabschnitt 17, der die Kurvenform eines Teilabschnitts einer Sinus-Halbwelle aufweist. Der Sinusabschnitt 17, insbesondere der Teilabschnitt, umfasst zweckmäßigerweise das Maximum 20 der Sinus-Halbwelle. Exemplarisch folgt die Zwischenkreis-Spannung V2 der gleichgerichteten Netzspannung in dem Sinusabschnitt 17. Die Spannungs-Halbwellen 16 umfassen exemplarisch ferner jeweils zwei Übergangsabschnitte 18, die vor und nach dem Sinusabschnitt 17 angeordnet sind. Die Übergangsabschnitte 18 umfassen die Minima 19 der Zwischenkreis-Spannung V2. In den Übergangsabschnitten 18 weisen die Spannungs-Halbwellen 16 exemplarisch nicht die Form einer Sinus-Halbwelle auf. Insbesondere sinkt die Zwischenkreis-Spannung in den Übergangsabschnitten 18 nicht auf null ab. Exemplarisch folgt die Zwischenkreis-Spannung V2 der gleichgerichteten Netzspannung in den Übergangsabschnitten 18 nicht.

Die Minima 19 jeder Spannungs-Halbwelle 16 betragen zweckmäßigerweise wenigstens 20%, vorzugsweise wenigstens 30% des Maximums 20. Beispielsweise betragen die Minima 19 jeder Spannungs-Halbwelle 16 wenigstens 90 V oder wenigstens 100 V. Ferner betragen die Minima 19 jeder Spannungs-Halbwelle 16 zweckmäßigerweise höchstens 70%, insbesondere höchstens 50%, vorzugsweise höchstens 40% oder höchstens 35%, des Maximums 20. Beispielsweise betragen die Minima 19 höchstens 120 V oder 110 V.

Aus dem Zwischenkreis 15 werden vorzugsweise die Steuereinheit 4 und/oder der Elektromotor 3 gespeist. Die Steuereinheit 4 ist ausgebildet, auf Basis der von dem Zwischenkreis 15 bereitgestellten elektrischen Energie, insbesondere auf Basis der Zwischenkreis-Spannung V2, Motorströme I1, I2, I3 zu erzeugen und dem Elektromotor 3 zuzuführen. Exemplarisch stellt die Steuereinheit 4 drei Motorströme I1, I2, I3 bereit. Beispielsweise fließen die Motorströme I1, I2, I3 von dem Zwischenkreis 15 ab.

Der Elektromotor 3 umfasst exemplarisch einen Stator 43 und einen Rotor 21. Der Rotor 21 ist mit dem Werkzeug 2 gekoppelt. Durch Bestromung des Elektromotors 3 mit den Motorströmen I1, I2, I3 wird der Rotor 21 in die Antriebs-Drehbewegung gegenüber dem Stator 43 versetzt.

Optional verfügt der Elektromotor 3 über eine Stellungssensoreinrichtung 22, die dazu dient, die Stellung und/oder Bewegung, insbesondere den aktuellen Winkel, des Rotors 21 zu erfassen. Die Stellungssensoreinrichtung 22 umfasst beispielsweise einen Magnetsensor, insbesondere einen Hall-Sensor. Zweckmäßigerweise ist die Steuereinheit 4 ausgebildet, den aktuellen Winkel des Rotors 21 mithilfe der Stellungssensoreinrichtung 22 zu erfassen. Die Steuereinheit 4 kann ferner ausgebildet sein, mithilfe der Stellungssensoreinrichtung 22 die aktuelle Drehzahl des Elektromotors 3 zu erfassen.

Alternativ oder zusätzlich kann die Steuereinheit 4 ausgebildet sein, den aktuellen Winkel des Rotors 21 und/oder die aktuelle Drehzahl des Elektromotors 3 sensorlos zu erfassen. In diesem Fall ist zweckmäßigerweise keine Stellungsensoreinrichtung 22 vorhanden. Die Steuereinheit 4 ist insbesondere ausgebildet, eine im Elektromotor induzierte Gegenspannung zu ermitteln und auf Basis der Gegenspannung den aktuellen Winkel des Rotors 21 und/oder die aktuelle Drehzahl des Elektromotors 3 zu berechnen. Die Steuereinheit 4 ist insbesondere ausgebildet, den aktuellen Winkel des Rotors 21 und/oder die aktuelle Drehzahl des Elektromotors 3 mittels des Back-EMF-Prinzips zu berechnen, wobei "EMF" für "Electromotive Force" steht.

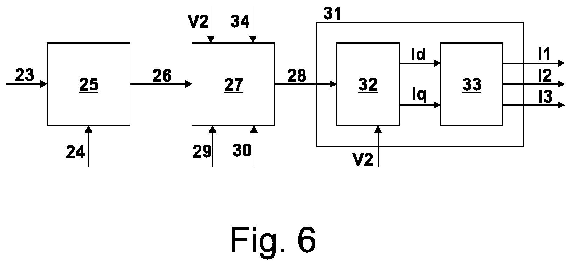

Die Figur 6 zeigt ein exemplarisches Blockdiagramm der von der Steuereinheit 4 für die Ansteuerung des Elektromotors 3 durchgeführten Signalverarbeitung.

Die Steuereinheit 4 ist zweckmäßigerweise ausgebildet, eine Drehzahl-Regelung des Elektromotors 3 durchzuführen. Insbesondere ist die Steuereinheit 4 ausgebildet, die Motorströme I1, I2, I3 auf Basis einer Soll-Drehzahl 23 und einer Ist-Drehzahl 24 bereitzustellen. Die Soll-Drehzahl 23 wird von der Steuereinheit 4 beispielsweise gemäß einer mit der Bedieneinrichtung 6 getätigten Benutzereingabe eingestellt. Alternativ kann die Soll-Drehzahl 23 in der Steuereinheit 4 im Voraus hinterlegt sein und/oder von der Steuereinheit 4 berechnet werden. Die Ist-Drehzahl 24 ist die aktuelle Drehzahl des Elektromotors 3 und wird zweckmäßigerweise wie vorstehend beschrieben erhalten - insbesondere mittels der Positionssensoreinrichtung 22 und/oder auf Basis eines sensorlosen Prinzips, insbesondere auf Basis der induzierten Gegenspannung. Die Ist-Drehzahl 24 beschreibt, wie schnell sich der Rotor 21 relativ zum Stator 43 dreht.

Die Steuereinheit 4 umfasst einen Drehzahlregler 25, dem die Soll-Drehzahl 23 und die Ist-Drehzahl 24 zugeführt werden. Auf Basis der Soll-Drehzahl 23 und der Ist-Drehzahl 24, insbesondere auf Basis eines Vergleichs zwischen der Soll-Drehzahl 23 und der Ist-Drehzahl 24, berechnet der Drehzahlregler 25 einen Drehmoment-Sollwert 26. Der Drehmoment-Sollwert 26 gibt das Drehmoment vor, mit dem der Rotor 21 durch Bestromung des Elektromotors 3 beaufschlagt werden soll, um eine Veränderung des Drehzahl-Istwerts hin zu dem Drehzahl-Sollwert zu erzielen.

Die Steuereinheit 4 umfasst ferner eine Drehmomentverlauf-Berechnungseinheit 27, die ausgebildet ist, auf Basis des Drehmoment-Sollwerts 26 einen zeitlichen Drehmomentverlauf 28 zu berechnen. Der Drehmomentverlauf 28 kann auch als Drehmomentsignal bezeichnet werden. Ein exemplarischer Drehmomentverlauf 28 ist in der Figur 5 gezeigt. Exemplarisch weist der Drehmomentverlauf 28 eine trapezförmige Kurvenform auf.

Die Steuereinheit 4 umfasst ferner eine Motorstrom-Bereitstellungseinheit 31, die ausgebildet ist, auf Basis des Drehmomentverlaufs 28 die Motorströme I1, I2, I3 zu berechnen. Exemplarisch umfasst die Motorstrom-Bereitstellungseinheit 31 eine Sollstrom-Vorgabeeinheit 32, die ausgebildet ist, einen q-Strom und einen d-Strom zu berechnen, insbesondere auf Basis des Drehmomentverlaufs 28. Der d-Strom und der q-Strom sind Ströme in einem rotorbezogenen d/q-System, das sich gemäß der Drehung des Rotors 21 dreht. Der d-Strom bildet die flussbildende Komponente und der q-Strom bildet die drehmomentbildende Komponente ab. Der d-Strom kann als d-Komponente oder als feldschwächender Strom bezeichnet werden und der q-Strom kann als q-Komponente oder als drehmomentbildender Strom bezeichnet werden. Die Sollstrom-Vorgabeeinheit 32 berechnet den q-Strom und den d-Strom derart, um bei Bestromung des Elektromotors 3 gemäß dem q-Strom und dem d-Strom den Drehmomentverlauf 28 zu erzielen. Exemplarisch entspricht der zeitliche Verlauf des berechneten q-Stroms dem Drehmomentverlauf 28. Insbesondere weist der q-Strom die gleiche Kurvenform auf wie der Drehmomentverlauf 28.

Die Motorstrom-Bereitstellungseinheit 31 umfasst zweckmäßigerweise einen Stromregler 33, der ausgebildet ist, die Motorströme I1, I2, I3 bereitzustellen. Insbesondere ist der Stromregler 33 ausgebildet, eine Stromregelung der Motorströme I1, I2, I3 durchzuführen. Die Motorströme I1, I2 und I3 sind vorzugsweise pulsweitenmoduliert. Der Stromregler 33 stellt die Motorströme I1, I2, I3 auf Basis des q-Stroms und des d-Stroms bereit, insbesondere durch Durchführung einer Transformation von einem zweiachsigen Koordinatensystem in ein dreiachsiges Koordinatensystem. Der Stromregler 33 stellt die Motorströme I1, I2, I3 so bereit, dass der berechnete q-Strom und der berechnete d-Strom erzielt werden. Mit den Motorströmen I1, I2, I3 wird der Elektromotor 3, insbesondere Motorwicklungen des Stators 43 bestromt. Der Rotor 21 weist exemplarisch einen Permanentmagneten auf und wird durch eine Interaktion des Permanentmagneten mit dem durch die Bestromung der Motorwicklungen erzeugten magnetischen Feld in die Antriebs-Drehbewegung versetzt.

Im Folgenden soll näher auf den Drehmomentverlauf 28 eingegangen werden. Die Figur 5 zeigt einen exemplarischen Drehmomentverlauf 28 (als durchgezogene Linie). Der Drehmomentverlauf 28 weist eine Mehrzahl von aufeinander folgenden Drehmoment-Halbwellen 36 auf. Exemplarisch haben die Drehmoment-Halbwellen 36 jeweils eine trapezförmige Kurvenform. Alternativ können die Drehmoment-Halbwellen eine andere Kurvenform, beispielsweise eine rechteckige Kurvenform, aufweisen.

Die Steuereinheit 4 ist ausgebildet, für jede Spannungs-Halbwelle 16 eine jeweilige Drehmoment-Halbwelle 36 für die Ansteuerung des Elektromotors 3 bereitzustellen, insbesondere zu berechnen. Die Kurvenform der jeweiligen Drehmoment-Halbwelle ist gegenüber der Kurvenform der Spannungs-Halbwelle 16 abgeflacht. Durch die abgeflachte Kurvenform wird insbesondere eine geringere ohmsche Verlustleistung bei der Bestromung des Elektromotors 3 bewirkt, zweckmäßigerweise bei gleichem Durchschnitts-Drehmoment.

Die Steuereinheit 4 bestromt den Elektromotor 3 zweckmäßigerweise proportional zu der Drehmoment-Halbwelle. Wenn die Drehmoment-Halbwelle 36 größere Werte annimmt, erhöht die Steuereinheit 4 die Bestromung des Elektromotors 3. Die ohmsche Verlustleistung ist eine Funktion des Quadrats der Bestromung des Elektromotors 3, so dass größere Ströme zu einer überproportionalen ohmschen Verlustleistung führen. Durch die abgeflachte Kurvenform der Drehmoment-Halbwellen 36 werden die für die ohmsche Verlustleistung (aufgrund der quadratischen Abhängigkeit) besonders signifikanten Strommaxima reduziert, so dass die ohmsche Verlustleistung verringert werden kann, insbesondere bei keiner oder nur geringer Verringerung des Drehmoments. Die abgeflachte Kurvenform kann auch als vergleichmäßigte Kurvenform bezeichnet werden. Insbesondere hat jede Drehmoment-Halbwelle 36 eine gleichmäßigere Kurvenform als die jeweilige Spannungs-Halbwelle 16 und/oder eine jeweilige (imaginäre) Sinus-Halbwelle 37 gleicher Periode und/oder gleicher Fläche.

Vorzugsweise ist die Standardabweichung der jeweiligen Drehmoment-Halbwelle 36 geringer als die Standardabweichung der jeweiligen Spannungs-Halbwelle 16 und/oder einer jeweiligen (imaginären) Sinus-Halbwelle 37 gleicher Periode und/oder gleicher Fläche.

Insbesondere ist die abgeflachte Kurvenform eine Kurvenform, die bei gleicher Fläche unter der Kurvenform ein geringeres Maximum aufweist, insbesondere relativ zu einer (imaginären) Sinus-Halbwelle 37. Die Figur 5 zeigt eine Referenzkurve 38 (als gestrichelte Linie), die die Kurvenform einer gleichgerichteten Sinuskurve aufweist und aufeinander folgende Sinus-Halbwellen 37 umfasst. Die Sinus-Halbwellen 37 weisen jeweils dieselbe Periode auf wie die Drehmoment-Halbwellen 36. Die Fläche unter jeder Sinus-Halbwelle 37 - also das Integral über die Periode der Sinus-Halbwelle 37 - ist zweckmäßigerweise gleich der Fläche unter einer jeweiligen Drehmoment-Halbwelle 36 - also gleich dem Integral über die Periode einer Drehmoment-Halbwelle 36. Das Maximum jeder Drehmoment-Halbwelle 36 ist zweckmäßigerweise kleiner, insbesondere wenigstens 10% kleiner oder wenigstens 20% kleiner, als das Maximum der jeweiligen Sinus-Halbwelle 37. Die Sinus-Halbwelle 37 dient an dieser Stelle zur mathematischen Definition der abgeflachten Kurvenform der Drehmoment-Halbwelle und muss nicht von dem Elektrowerkzeug 1 bereitgestellt werden. Die abgeflachte Kurvenform jeder Drehmoment-Halbwelle 36 ist vorzugsweise mathematisch so definiert, dass sie bei gleicher Periode und gleicher Fläche wie eine (insbesondere imaginäre) Sinus-Halbwelle 37 ein kleineres Maximum als die Sinus-Halbwelle 37 aufweist.

Beispielsweise ist bei der abgeflachten Kurvenform das Verhältnis zwischen dem Maximum der Kurvenform und dem Durchschnittswert der Kurvenform reduziert. Zweckmäßigerweise ist das Verhältnis zwischen dem Maximum der Drehmoment-Halbwelle 36 und dem Durchschnittswert der Drehmoment-Halbwelle 36 kleiner als das Verhältnis zwischen dem Maximum 20 der Spannungs-Halbwelle 16 und dem Durchschnittswert der Spannungs-Halbwelle 16.

Bevorzugt ist die Steuereinheit 4 ausgebildet, die Drehmoment-Halbwelle 36 mit einer Trapez-Kurvenform oder einer Rechteck-Kurvenform bereitzustellen.

Die Erläuterung einer Drehmoment-Halbwelle 36 gilt vorzugsweise für jede Drehmoment-Halbwelle 36. Die Drehmoment-Halbwelle 36 weist einen Plateau-Abschnitt 39 auf, der das Maximum der der Drehmoment-Halbwelle 36 umfasst oder darstellt. Der Plateau-Abschnitt 39 hat vorzugsweise eine Steigung von 0 und erstreckt sich insbesondere über wenigstens 40%, wenigstens 50%, wenigstens 60%, wenigstens 70% oder wenigstens 80% der Periode der Drehmoment-Halbwelle 36. Exemplarisch ist das Maximum 42 der Sinus-Halbwelle 37 höher als der Plateau-Abschnitt 39. Die Drehmoment-Halbwelle 36 weist ferner zwei Flankenabschnitte 40 auf, die den Plateau-Abschnitt 39 umgeben. Die Flankenabschnitte 40 weisen (betragsmäßig) eine höhere Steigung als der Plateauabschnitt 39, insbesondere eine höhere Steigung als die Sinus-Halbwelle 37 und/oder die Spannungs-Halbwelle 16 auf. Gemäß einer möglichen Ausgestaltung können die Flankenabschnitte 40 senkrecht sein - also insbesondere eine Steigung von (betragsmäßig) unendlich aufweisen. Die Drehmoment-Halbwelle 37 weist ferner zweckmäßigerweise zwei Drehmoment-Minima 41 auf, die den Anfang und das Ende der Drehmoment-Halbwelle 36 darstellen. Exemplarisch ist das Drehmoment bei den Drehmoment-Minima 41 gleich null. Eine Drehmoment-Halbwelle 36 umfasst also die folgenden Abschnitte, die in der genannten Reihenfolge zeitlich aufeinander folgen, insbesondere direkt aufeinander: ein erstes Drehmoment-Minimum 41 (vorzugsweise gleich null), ein erster Flankenabschnitt 40 (vorzugsweise mit positiver Steigung), der Plateau-Abschnitt 39 (vorzugsweise mit einer Steigung von null), ein zweiter Flankenabschnitt 40 (vorzugsweise mit negativer Steigung) und ein zweites Drehmoment-Minimum (vorzugsweise gleich null). Die Drehmoment-Minima 41 erstrecken sich zusammen zeitlich über insbesondere wenigstens 10%, wenigstens 20% oder wenigstens 30% der Periode der Drehmoment-Halbwelle 36

Die Steuereinheit 4 ist zweckmäßigerweise ausgebildet, jede Drehmoment-Halbwelle 36 mit einer Periode gleich der Periode einer jeweiligen Spannungs-Halbwelle 16 bereitzustellen. Vorzugsweise ist die Frequenz des Drehmomentverlaufs 28 doppelt so hoch wie die Frequenz der Netzspannung V1. Insbesondere beträgt die Frequenz des Drehmomentverlaufs 28 100 Hz oder 120 Hz.

Beispielsweise erfasst die Steuereinheit 4 die Periode der Spannungs-Halbwellen 16 und/oder den zeitlichen Abstand benachbarter Nulldurchgänge der Netzspannung V1 und nimmt die erfasste Periode und/oder den zeitlichen Abstand als Periode für die Drehmoment-Halbwellen 36. Zweckmäßigerweise synchronisiert die Steuereinheit 4 die Drehmoment-Halbwellen 36 mit der Netzspannung V1 und/oder den Spannungs-Halbwellen 16. Beispielsweise synchronisiert die Steuereinheit 4 die Minima des Drehmomentverlaufs 28 mit den Nulldurchgängen der Netzspannung V1, so dass die Minima des Drehmomentverlaufs 28 zeitgleich zu den Nulldurchgängen der Netzspannung V2 erfolgen. Ferner kann die Steuereinheit 4 die Minima des Drehmomentverlaufs 28 mit den Minima 19 der Zwischenkreis-Spannung V2 synchronisieren, so dass die Minima des Drehmomentverlaufs 28 zeitgleich zu den Minima der Zwischenkreis-Spannung V2 erfolgen. Beispielsweise ist die Steuereinheit 4 ausgebildet, einen Phasenwinkel 30 der Netzspannung V1 und/oder der Zwischenkreis-Spannung V2 zu ermitteln und die Drehmoment-Halbwelle 36 gemäß dem Phasenwinkel 30 bereitzustellen, insbesondere derart, dass die Drehmoment-Halbwelle 36 synchron ist mit der Spannungs-Halbwelle 16 und/oder mit der Netzspannung V1. Der Drehmomentverlauf 28 weist zweckmäßigerweise denselben Phasenwinkel auf wie die Zwischenkreis-Spannung V2.

Die Steuereinheit 4, insbesondere die Drehmomentverlauf-Berechnungseinheit 27, ist vorzugsweise ausgebildet, den Drehmomentverlauf 28 auf Basis eines Kurvenform-Profils 29 zu berechnen. Das Kurvenform-Profil ist zweckmäßigerweise im Voraus in der Steuereinheit 4 hinterlegt und/oder wird von der Steuereinheit 4 bereitgestellt. Das Kurvenform-Profil 29 definiert die abgeflachte Kurvenform der Drehmoment-Halbwelle 36. Beispielsweise definiert das Kurvenform-Profil 29 eine Trapez-Kurvenform oder eine Rechteck-Kurvenform.

Die Steuereinheit 4 ist exemplarisch ausgebildet, den Drehmomentverlauf 28 unter Berücksichtigung des Phasenwinkels 30 zu berechnen. Insbesondere ist die Steuereinheit 4 ausgebildet, auf Basis des Phasenwinkels 30 die Periode für eine jeweilige Drehmoment-Halbwelle 36 zu berechnen und das Kurvenform-Profil 29 gemäß der berechneten Periode zeitlich zu strecken oder zu stauchen, so dass die Periode des Kurvenform-Profils 29 gleich der berechneten Periode ist.

Zweckmäßigerweise ist die Steuereinheit 4 ferner ausgebildet, die jeweilige Drehmoment-Halbwelle 36 auf Basis des Drehmoment-Sollwerts 26 zu berechnen. Insbesondere ist die Steuereinheit 4 ausgebildet, die jeweilige Drehmoment-Halbwelle 36 so zu berechnen, dass der Durchschnittswert der Drehmoment-Halbwelle 36 gleich dem Drehmoment-Sollwert 26 ist. Insbesondere ist die Steuereinheit 4 ausgebildet, die jeweilige Drehmoment-Halbwelle 36 durch Skalierung des Kurvenform-Profils 29 gemäß dem Drehmoment-Sollwert 26 zu berechnen. Exemplarisch ist die Steuereinheit 4 ausgebildet, das Kurvenform-Profil 29 mit dem Drehmoment-Sollwert 26 oder einem von dem Drehmoment-Sollwert 26 abhängigen Skalierungsfaktor zu skalieren.

Wie vorstehend erwähnt, verfügt die Steuereinheit 4 über einen Drehzahlregler 25 zur Bereitstellung des Drehmoment-Sollwerts 26, auf dessen Basis die Steuereinheit 4 die jeweilige Drehmoment-Halbwelle 36 bereitstellt. Die Steuereinheit 4 ist insbesondere ausgebildet, gemäß der Drehmoment-Halbwelle den Elektromotor 3 zu bestromen.

Die Bereitstellung der Drehmoment-Halbwelle 36 kann auch als Drehmoment-Formung bezeichnet werden. Durch die Drehmomentformung und die damit einhergehende Stromformung, insbesondere in Form eines Trapezes oder eines Rechtecks, kann die ohmsche Verlustleistung - also die Kupferverluste - reduziert werden, so dass der Elektromotor 3 kleiner ausgeführt werden kann.

Wie vorstehend bereits erläutert, wird zweckmäßigerweise ein kleiner Zwischenkreis 15 verwendet, so dass die Zwischenkreis-Spannung V2 hauptsächlich der (gleichgerichteten) Netzspannung entspricht. Durch einen kleinen Zwischenkreis können zweckmäßigerweise Bauraum und Kosten gespart werden. Um Kupferverluste - also die ohmsche Verlustleistung - im Elektromotor 3 zu reduzieren, wird zweckmäßigerweise das Drehmoment und damit die Bestromung des Elektromotors 3, insbesondere der q-Strom, zu einem Trapez oder Rechteck geregelt, welches vorzugsweise die doppelte Netzfrequenz aufweist.

Da sich die Kupferverluste über I²*R berechnen, soll der Plateauabschnitt 39 der trapezförmigen Drehmoment-Halbwelle 36 einen möglichst kleinen Drehmomentwert aufweisen. Dies wird bevorzugt dadurch erreicht indem die Zeit je Halbwelle, in der Strom in den Elektromotor 3 fließen kann möglichst groß gewählt wird, also indem die zeitliche Erstreckung des Plateauabschnitts 39 groß gewählt wird. Der Elektromotor 3 ist zweckmäßigerweise auf eine kleinere Spannung ausgelegt als die Netzspannung V1. Zweckmäßigerweise wird ferner die induzierte Gegenspannung des Elektromotors 3 durch eine Variation des feldschwächenden Stroms abhängig von der Zwischenkreis-Spannung V2 verändert.

Bevorzugt ist die Steuereinheit 4 ausgebildet, eine im Elektromotor 3 induzierte Gegenspannung 34 zu ermitteln und in Ansprechen darauf, dass die Gegenspannung 34 größer ist als die Zwischenkreis-Spannung V2, einen aktuellen Drehmomentwert der Drehmoment-Halbwelle 36 zu reduzieren, insbesondere auf null zu setzen, exemplarisch mittels der Drehmomentverlauf-Berechnungseinheit 27. Exemplarisch ist die Steuereinheit 4 ausgebildet, die induzierte Gegenspannung 34 auf Basis der Drehzahl des Rotors 21 zu ermitteln. Insbesondere ist die Steuereinheit 4 ausgebildet, in Ansprechen darauf, dass die Gegenspannung 34 größer ist als die Zwischenkreis-Spannung V2 den q-Strom und vorzugsweise den d-Strom zu reduzieren, insbesondere auf null zu setzen, vorzugsweise auf null zu regeln. Auf diese Weise können unerwünschte Bremsmomente vermieden oder verringert werden, die dann auftreten können, wenn die induzierte Gegenspannung 34 größer ist als die Zwischenkreis-Spannung V2.

Die Steuereinheit 4 ist insbesondere ausgebildet, den drehmomentbildenden Strom zu null zu regeln, wenn die induzierte Gegenspannung 34 des Elektromotors 3 größer oder gleich der Zwischenkreis-Spannung V2 ist. Die Regelung des drehmomentbildenden Stroms bleibt aktiv und wird nicht abgeschaltet, wenn die induzierte Gegenspannung 34 des Elektromotors 3 größer oder gleich der Zwischenkreis-Spannung V2 ist.

Bevorzugt ist die Steuereinheit 4, insbesondere die Sollstrom-Vorgabeeinheit 32, ausgebildet, den d-Strom unter Berücksichtigung der Zwischenkreis-Spannung V2 zu berechnen. Insbesondere ist die Steuereinheit 4 ausgebildet, den d-Strom Id gemäß der Zwischenkreis-Spannung V2 einzustellen. Beispielsweise ist die Steuereinheit 4 ausgebildet, den d-Strom Id bei einer höheren Zwischenkreis-Spannung V2 betragsmäßig zu reduzieren und bei einer niedrigeren Zwischenkreis-Spannung V2 betragsmäßig zu erhöhen. Insbesondere ist die Steuereinheit 4 ausgebildet, den d-Strom Id auf Basis der Zwischenkreis-Spannung V2 so einzustellen, dass die induzierte Gegenspannung reduziert wird, insbesondere unterhalb der Zwischenkreis-Spannung V2. Die Einstellung des d-Stroms Id erfolgt beispielsweise invers proportional zur Zwischenkreis-Spannung V2. Bei einer steigenden Zwischenkreis-Spannung V2 wird der d-Strom Id betragsmäßig reduziert und bei einer sinkenden Zwischenkreis-Spannung V2 wird der d-Strom Id betragsmäßig erhöht.

Insbesondere ist die Steuereinheit 4 ausgebildet, den Elektromotor stets zu bestromen, und zwar gemäß dem d-Strom und/oder dem q-Strom, so dass Bremsmomente verhindert werden und insbesondere so, dass der Leistungsfaktor dynamisch zur Last angepasst wird.

Insbesondere ist die Steuereinheit 4 ausgebildet, eine Variation von d-Strom und q-Strom in Abhängigkeit der Zwischenkreis-Spannung V2 und/oder Netzspannung V1 durchzuführen, um den Motor stets optimal anzusteuern, um möglichst wenig Strom zu benötigen.

Das Elektrowerkzeug 1 kann insbesondere gemäß dem nachfolgend erläuterten Verfahren betrieben werden. Das Verfahren umfasst einen ersten Schritt, bei dem mittels der Gleichrichteranordnung 12 mit dem Zwischenkreis 15, die Zwischenkreis-Spannung V2 auf Basis der Netzspannung V1, an die das Elektrowerkzeug 1 angeschlossen ist, bereitgestellt wird. Die Zwischenkreis-Spannung V2 weist die Mehrzahl von aufeinander folgenden Spannungs-Halbwellen 16 auf. Das Verfahren umfasst einen zweiten Schritt, bei dem für jede Spannungs-Halbwelle 16 eine jeweilige Drehmoment-Halbwelle für die Ansteuerung des Elektromotors 3 bereitgestellt wird. Die Kurvenform der jeweiligen Drehmoment-Halbwelle ist gegenüber der Kurvenform der Spannungs-Halbwelle abgeflacht.

Zweckmäßigerweise umfasst das Verfahren einen weiteren Schritt, bei dem der Elektromotor 3 gemäß den Drehmoment-Halbwellen bestromt wird, so dass der Rotor 21 in die Antriebs-Drehbewegung versetzt wird und dadurch das Werkzeug 2 in die Arbeits-Bewegung versetzt wird.

Zweckmäßigerweise umfasst das Verfahren einen weiteren Schritt, bei dem mit dem Werkzeug 2 ein Werkstück bearbeitet, insbesondere poliert, geschliffen oder gesägt, wird.

## Patentansprüche

1. Elektrowerkzeug (1), insbesondere handgeführtes Elektrowerkzeug, beispielsweise Poliergerät (1A), Schleifgerät und/oder Sägegerät (1B), mit einem Werkzeug (2), einem Elektromotor (3) zum Antrieb des Werkzeugs (2) und einer Steuereinheit (4) zur Ansteuerung des Elektromotors (3), wobei das Elektrowerkzeug (1) zum Anschluss an eine Netzspannung (V1) ausgebildet ist und eine Gleichrichteranordnung (12) mit einem Zwischenkreis (15) zur Bereitstellung einer Zwischenkreis-Spannung (V2) auf Basis der Netzspannung (V1) umfasst, wobei die Zwischenkreis-Spannung (V2) eine Mehrzahl von aufeinander folgenden Spannungs-Halbwellen (16) aufweist, und **dadurch gekennzeichnet, dass** die Steuereinheit (4) ausgebildet ist, für jede Spannungs-Halbwelle (16) eine jeweilige Drehmoment-Halbwelle (36) für die Ansteuerung des Elektromotors (3) bereitzustellen, deren Kurvenform gegenüber der Kurvenform der Spannungs-Halbwelle (16) abgeflacht ist, wobei jede Drehmoment-Halbwelle (36) über Drehmoment-Minima (41) verfügt, die sich zusammen zeitlich über wenigstens 10% der Periode der Drehmoment-Halbwelle (36) erstrecken.

2. Elektrowerkzeug (1) nach Anspruch 1, wobei die Steuereinheit (4) ausgebildet ist, die Drehmoment-Halbwelle (36) mit einer Kurvenform bereitzustellen, die bei gleicher Fläche wie eine Sinus-Halbwelle (37) ein geringeres Maximum als die Sinus-Halbwelle (37) aufweist.

3. Elektrowerkzeug (1) nach einem voranstehenden Anspruch, wobei die abgeflachte Kurvenform bei gleichem mittleren Drehmoment eine geringere ohmsche Verlustleistung bei der Bestromung des Elektromotors (3) bewirkt.

4. Elektrowerkzeug (1) nach einem voranstehenden Anspruch, wobei die Steuereinheit (4) ausgebildet ist, die Drehmoment-Halbwelle (36) mit einer Trapez-Kurvenform oder einer Rechteck-Kurvenform bereitzustellen.

5. Elektrowerkzeug (1) nach einem voranstehenden Anspruch, wobei die Steuereinheit (4) ausgebildet ist, die Drehmoment-Halbwelle (36) unter Verwendung eines Kurvenform-Profils (29) zu berechnen.

6. Elektrowerkzeug (1) nach einem voranstehenden Anspruch, wobei die Steuereinheit (4) ausgebildet ist, die Drehmoment-Halbwelle (36) auf Basis eines Drehmoment-Sollwerts (26) zu berechnen.

7. Elektrowerkzeug (1) nach einem voranstehenden Anspruch, wobei die Steuereinheit (4) ausgebildet ist, die Drehmoment-Halbwelle (36) durch Skalierung eines/des Kurvenform-Profils (29) gemäß einem/dem Drehmoment-Sollwert (26) zu berechnen.

8. Elektrowerkzeug (1) nach einem voranstehenden Anspruch, wobei die Steuereinheit (4) ausgebildet ist, einen Phasenwinkel (30) der Netzspannung (V1) und/oder der Zwischenkreis-Spannung (V2) zu ermitteln und die Drehmoment-Halbwelle gemäß dem Phasenwinkel (V2) bereitzustellen.

9. Elektrowerkzeug (1) nach einem voranstehenden Anspruch, wobei die Steuereinheit (4) über einen Drehzahlregler (25) zur Bereitstellung eines/des Drehmoment-Sollwerts (26) verfügt, auf dessen Basis die Steuereinheit (4) die jeweilige Drehmoment-Halbwelle (36) bereitstellt.

10. Elektrowerkzeug (1) nach einem voranstehenden Anspruch, wobei die Steuereinheit (4) ausgebildet ist, gemäß der Drehmoment-Halbwelle (36) den Elektromotor (3) zu bestromen.

11. Elektrowerkzeug (1) nach einem voranstehenden Anspruch, wobei die Steuereinheit (4) ausgebildet ist, für die Ansteuerung des Elektromotors (3) einen d-Strom (Id) und einen q-Strom (Iq) zu berechnen und den d-Strom (Id) gemäß der Zwischenkreis-Spannung (V2) einzustellen, wobei vorzugsweise die Steuereinheit (4) ausgebildet ist, den d-Strom (Id) bei höherer Zwischenkreis-Spannung (V2) betragsmäßig zu reduzieren und bei niedrigerer Zwischenkreis-Spannung (V2) betragsmäßig zu erhöhen.

12. Elektrowerkzeug (1) nach einem der voranstehenden Ansprüche, wobei die Steuereinheit (4) ausgebildet ist, eine im Elektromotor (3) induzierte Gegenspannung (34) zu ermitteln und in Ansprechen darauf, dass die Gegenspannung (34) größer ist als die Zwischenkreis-Spannung (V2), einen aktuellen Drehmomentwert der Drehmoment-Halbwelle (36) zu reduzieren, insbesondere auf null zu setzen.

13. Verfahren zum Betrieb eines Elektrowerkzeugs (1), insbesondere eines handgeführten Elektrowerkzeugs, beispielsweise eines Poliergeräts (1A), Schleifgeräts und/oder Sägegeräts (1B), mit einem Werkzeug (2), einem Elektromotor (3) zum Antrieb des Werkzeugs (2) und einer Steuereinheit (4) zur Ansteuerung des Elektromotors (3), umfassend die Schritte:
- Bereitstellen, mittels einer Gleichrichteranordnung (12) mit einem Zwischenkreis (15), einer Zwischenkreis-Spannung (V2) auf Basis einer Netzspannung (V1), an die das Elektrowerkzeug (1) angeschlossen ist, wobei die Zwischenkreis-Spannung (V2) eine Mehrzahl von aufeinander folgenden Spannungs-Halbwellen (16) aufweist, und
- für jede Spannungs-Halbwelle (16) Bereitstellen einer jeweiligen Drehmoment-Halbwelle (36) für die Ansteuerung des Elektromotors (3), deren Kurvenform gegenüber der Kurvenform der Spannungs-Halbwelle (16) abgeflacht ist, wobei jede Drehmoment-Halbwelle (36) über Drehmoment-Minima (41) verfügt, die sich zusammen zeitlich über wenigstens 10% der Periode der Drehmoment-Halbwelle (36) erstrecken.

14. Verfahren nach Anspruch 13, wobei das Elektrowerkzeug (1) gemäß einem der Ansprüche 1 bis 12 ausgebildet ist.

15. Computerprogrammprodukt umfassend Befehle, die bewirken, dass das Elektrowerkzeug (1) nach Anspruch 1 die Verfahrensschritte nach einem der Anspruch 13 bis 14 ausführt.

## Claims

1. Power tool (1), in particular a hand-held power tool, for example a polishing device (1A), grinding device and/or sawing device (1B), with a tool (2), an electric motor (3) for driving the tool (2) and a control unit (4) for controlling the electric motor (3), wherein the power tool (1) is designed for connection to a mains voltage (V1) and comprises a rectifier arrangement (12) with an intermediate circuit (15) for providing an intermediate circuit voltage (V2) based on the mains voltage (V1), the intermediate circuit voltage (V2) having a plurality of successive voltage half-waves (16), **characterized in that** the control unit (4) is configured to provide, for each voltage half-wave (16), a respective torque half-wave (36) for driving the electric motor (3), the waveform of which torque half-wave (36) is flattened with respect to the waveform of the voltage half-wave (16), wherein each torque half-wave (36) has torque minima (41), which together extend temporally over at least 10% of the period of the torque half-wave (36).

2. Power tool (1) according to claim 1, wherein the control unit (4) is configured to provide the torque half-wave (36) with a waveform that has, for the same area as a sine half-wave (37), a lower maximum than the sine half-wave (37).

3. Power tool (1) according to a preceding claim, wherein the flattened waveform results, for the same average torque, in a lower ohmic power loss when the electric motor (3) is energized.

4. Power tool (1) according to a preceding claim, wherein the control unit (4) is configured to provide the torque half-wave (36) with a trapezoidal waveform or a rectangular waveform.

5. Power tool (1) according to a preceding claim, wherein the control unit (4) is adapted to calculate the torque half-wave (36) using a waveform profile (29).

6. Power tool (1) according to a preceding claim, wherein the control unit (4) is configured to calculate the torque half-wave (36) on the basis of a torque setpoint (26).

7. Power tool (1) according to a preceding claim, wherein the control unit (4) is configured to calculate the torque half-wave (36) by scaling a/the waveform profile (29) according to a/the torque setpoint (26).

8. Power tool (1) according to a preceding claim, wherein the control unit (4) is configured to determine a phase angle (30) of the mains voltage (V1) and/or the intermediate circuit voltage (V2) and to provide the torque half-wave according to the phase angle (30).

9. Power tool (1) according to a preceding claim, wherein the control unit (4) has a closed-loop rotational speed controller (25) for providing a/the torque setpoint (26) on the basis of which the control unit (4) provides the respective torque half-wave (36).

10. Power tool (1) according to a preceding claim, wherein the control unit (4) is configured to energize the electric motor (3) in accordance with the torque half-wave (36).

11. Power tool (1) according to a preceding claim, wherein the control unit (4) is configured to calculate a d current (Id) and a q current (Iq) for controlling the electric motor (3) and to set the d current (Id) in accordance with the intermediate circuit voltage (V2), wherein preferably the control unit (4) is configured to reduce the d current (Id) in absolute value when the intermediate circuit voltage (V2) is higher and to increase the d current (Id) in absolute value when the intermediate circuit voltage (V2) is lower.

12. Power tool (1) according to one of the preceding claims, wherein the control unit (4) is configured to determine a countervoltage (34) induced in the electric motor (3) and, in response to the fact that the countervoltage (34) is greater than the intermediate circuit voltage (V2), to reduce a current torque value of the torque half-wave (36), in particular to set it to zero.

13. Method for operating a power tool (1), in particular a hand-held power tool, for example a polishing device (1A), grinding device and/or sawing device (1B), with a tool (2), an electric motor (3) for driving the tool (2) and a control unit (4) for controlling the electric motor (3), comprising the steps:
- providing, by means of a rectifier arrangement (12) comprising an intermediate circuit (15), an intermediate circuit voltage (V2) based on a mains voltage (V1) to which the power tool (1) is connected, the intermediate circuit voltage (V2) comprising a plurality of successive voltage half-waves (16), and
- for each voltage half-wave (16), providing a respective torque half-wave (36) for driving the electric motor (3), the waveform of which is flattened relative to the waveform of the voltage half-wave (16), wherein each torque half-wave (36) has torque minima (41), which together extend temporally over at least 10% of the period of the torque half-wave (36).

14. Method according to claim 13, wherein the power tool (1) is adapted in accordance with one of claims 1 to 12.

15. Computer program product comprising instructions which cause the power tool (1) according to claim 1 to carry out the method steps in accordance with one of claims 13 to 14.

## Revendications

1. Outil électrique (1), en particulier outil électrique guidé à la main, par exemple appareil de polissage (1A), appareil de meulage et/ou appareil de sciage (1B), avec un outil (2), un moteur électrique (3) pour entraîner l'outil (2) et une unité de commande (4) pour commander le moteur électrique (3), dans lequel l'outil électrique (1) est réalisé pour être raccordé à une tension secteur (V1) et comprend un ensemble de redresseur (12) avec un circuit intermédiaire (15) pour fournir une tension de circuit intermédiaire (V2) sur la base de la tension secteur (V1), dans lequel la tension de circuit intermédiaire (V2) présente une pluralité de demi-ondes de tension (16) consécutives, et **caractérisé en ce que** l'unité de commande (4) est réalisée pour fournir, pour chaque demi-onde de tension (16), une demi-onde de couple (36) respective pour la commande du moteur électrique (3), dont la forme d'onde est aplatie par rapport à la forme d'onde de la demi-onde de tension (16), dans lequel chaque demi-onde de couple (36) dispose de couples minimaux (41) qui s'étendent ensemble dans le temps sur au moins 10 % de la période de la demi-onde de couple (36).

2. Outil électrique (1) selon la revendication 1, dans lequel l'unité de commande (4) est réalisée pour fournir la demi-onde de couple (36) avec une forme d'onde qui présente, pour une même surface qu'une demi-onde sinusoïdale (37), un maximum inférieur à celui de la demi-onde sinusoïdale (37).

3. Outil électrique (1) selon une revendication précédente, dans lequel la forme d'onde aplatie entraîne, pour un couple moyen identique, une perte de puissance ohmique inférieure lors de l'alimentation du moteur électrique (3).

4. Outil électrique (1) selon une revendication précédente, dans lequel l'unité de commande (4) est réalisée pour fournir la demi-onde de couple (36) avec une forme d'onde trapézoïdale ou une forme d'onde rectangulaire.

5. Outil électrique (1) selon une revendication précédente, dans lequel l'unité de commande (4) est réalisée pour calculer la demi-onde de couple (36) à l'aide d'un profil de forme d'onde (29).

6. Outil électrique (1) selon une revendication précédente, dans lequel l'unité de commande (4) est réalisée pour calculer la demi-onde de couple (36) sur la base d'une valeur de consigne de couple (26).

7. Outil électrique (1) selon une revendication précédente, dans lequel l'unité de commande (4) est réalisée pour calculer la demi-onde de couple (36) par mise à l'échelle d'un/du profil de forme d'onde (29) selon une/la valeur de consigne de couple (26).

8. Outil électrique (1) selon une revendication précédente, dans lequel l'unité de commande (4) est réalisée pour déterminer un angle de phase (30) de la tension secteur (V1) et/ou de la tension de circuit intermédiaire (V2) et pour fournir la demi-onde de couple selon l'angle de phase (V2).

9. Outil électrique (1) selon une revendication précédente, dans lequel l'unité de commande (4) dispose d'un régulateur de vitesse de rotation (25) pour fournir une/la valeur de consigne de couple (26), sur la base de laquelle l'unité de commande (4) fournit la demi-onde de couple (36) respective.

10. Outil électrique (1) selon une revendication précédente, dans lequel l'unité de commande (4) est réalisée pour alimenter le moteur électrique (3) en courant électrique en fonction de la demi-onde de couple (36).

11. Outil électrique (1) selon une revendication précédente, dans lequel l'unité de commande (4) est réalisée pour calculer un courant d (Id) et un courant q (Iq) pour la commande du moteur électrique (3) et pour ajuster le courant d (Id) en fonction de la tension de circuit intermédiaire (V2), dans lequel de préférence l'unité de commande (4) est réalisée pour réduire le courant d (Id) en valeur à une tension de circuit intermédiaire (V2) plus élevée et pour l'augmenter en valeur à une tension de circuit intermédiaire (V2) plus faible.

12. Outil électrique (1) selon l'une quelconque des revendications précédentes, dans lequel l'unité de commande (4) est réalisée pour déterminer une contre-tension (34) induite dans le moteur électrique (3) et, en réponse au fait que la contre-tension (34) est supérieure à la tension de circuit intermédiaire (V2), pour réduire, en particulier mettre à zéro, une valeur de couple actuelle de la demi-onde de couple (36).

13. Procédé de fonctionnement d'un outil électrique (1), en particulier d'un outil électrique à main, par exemple d'un appareil de polissage (1A), appareil de meulage et/ou appareil de sciage (1B), avec un outil (2), un moteur électrique (3) pour entraîner l'outil (2) et une unité de commande (4) pour commander le moteur électrique (3), comprenant les étapes :
- de fourniture, au moyen d'un ensemble de redresseur (12) avec un circuit intermédiaire (15), d'une tension de circuit intermédiaire (V2) sur la basée d'une tension secteur (V1) à laquelle l'outil électrique (1) est connecté, dans lequel la tension de circuit intermédiaire (V2) présente une pluralité de demi-ondes de tension (16) consécutives, et
- pour chaque demi-onde de tension (16), de fourniture d'une demi-onde de couple (36) respective pour la commande du moteur électrique (3), dont la forme d'onde est aplatie par rapport à la forme d'onde de la demi-onde de tension (16), dans lequel chaque demi-onde de couple (36) dispose de minima de couple (41) qui s'étendent ensemble dans le temps sur au moins 10 % de la période de la demi-onde de couple (36).

14. Procédé selon la revendication 13, dans lequel l'outil électrique (1) est réalisé selon l'une quelconque des revendications 1 à 12.

15. Produit-programme d'ordinateur comprenant des instructions qui ont pour effet que l'outil électrique (1) selon la revendication 1 exécute les étapes de procédé selon l'une des revendications 13 à 14.
